Europäisches Patentamt

European Patent Office

Office européen des brevets

(19)

(11) Publication number: **0 413 672 B1**

# (12) EUROPEAN PATENT SPECIFICATION

(45) Date of publication of patent specification: **15.02.95**    (51) Int. Cl.$^6$: **C07F 9/38**

(21) Application number: **90870124.6**

(22) Date of filing: **13.08.90**

(54) **Process for purifying N-phosphonomethylglycine.**

(30) Priority: **17.08.89 US 394998**

(43) Date of publication of application:
**20.02.91 Bulletin 91/08**

(45) Publication of the grant of the patent:
**15.02.95 Bulletin 95/07**

(84) Designated Contracting States:
**AT BE CH DE DK ES FR GB GR IT LI LU NL SE**

(56) References cited:
**EP-A- 0 323 821**

(73) Proprietor: **MONSANTO COMPANY**
**Patent Department**
**800 North Lindbergh Boulevard**
**St. Louis, Missouri 63167 (US)**

(72) Inventor: **Smith, Lowell Richard**
**1750 Kimkirk Court**
**Kirkwood,**
**Missouri 63122 (US)**

(74) Representative: **Bosch, Henry et al**
**Monsanto Services International S.A.**
**Patent Department**
**Avenue de Tervuren 270/272**
**Letter Box No. 21**
**B-1150 Brussels (BE)**

EP 0 413 672 B1

Rank Xerox (UK) Business Services
(3.10/3.09/3.3.3)

**Description**

Background of the Invention

This invention relates to a method for purifying and concentrating N-phosphonomethylglycine in an aqueous solution containing impurities using weakly basic ion exchange resin.

N-Phosphonomethylglycine, known in the agricultural chemical art as glyphosate, is a highly effective and commercially important phytotoxicant useful in controlling the growth of germinating seeds, emerging seedlings, maturing and established woody and herbaceous vegetation, and aquatic plants. N-Phosphonomethylglycine and its salts are conveniently applied in an aqueous formulation as a post-emergent phytotoxicant for the control of numerous plant species. N-Phosphonomethylglycine and its salts are characterized by a broad spectrum activity, i.e. the control growth of a wide variety of plants.

Numerous methods are known in the art for the preparation of N-phosphonomethylglycine. For example, U.S. Patent 3,969,398 to Hershman discloses a process for the production of N-phosphonomethylglycine by the oxidation of N-phosphonomethyliminodiacetic acid utilizing a molecular oxygen-containing gas as the oxidant in the presence of a catalyst consisting essentially of activated carbon. U.S. Patent 3,954,848 to Franz discloses the oxidation of N-phosphonomethyliminodiacetic acid with hydrogen peroxide and an acid such as sulfuric acid. U.S. Patent 4,670,190 to Kleiner discloses a process for the preparation of N-phosphonomethylglycine by reacting aminomethylphosphonic acid and glyoxylic acid in a molar ratio of about 1 to 2 in an aqueous medium or aqueous organic medium at temperatures between 30° and 100°C. These references are only illustrative, since there are many other methods known in the art for preparing N-phosphonomethylglycine.

Regardless of the process by which N-phosphonomethylglycine is prepared, all of these processes produce aqueous streams, including waste streams, that contain N-phosphonomethylglycine and various by-products and unreacted starting materials, for example, N-phosphonomethyliminodiacetic acid, N-formyl-N-phosphonomethylglycine, phosphoric acid, phosphorous acid, hexamethylenetetraamine, aminomethylphosphonic acid, iminodiacetic acid, formaldehyde, formic acid, and the like. Because of the valuable nature of the N-phosphonomethylglycine, it can be seen that there is a need among those skilled in the art to be able to recover the valuable N-phosphonomethylglycine from such aqueous streams by purifying the N-phosphonomethylglycine and recycling the other products to an earlier stage of the process for further conversion to the desired N-phosphonomethylglycine, or discharging such aqueous streams to waste treatment facilities and recovering the N-phosphonomethylglycine before it is so discharged.

Now, according to the present invention, there is provided a method of purifying and concentrating the N-phosphonomethylglycine in the presence of more acidic and basic compounds in the aqueous streams. In one embodiment of this invention, there is provided a method of concentrating and purifying the N-phosphonomethylglycine in the aqueous streams by first separating the components that are more acidic than N-phosphonomethylglycine, and thereafter separating the N-phosphonomethylglycine from those components that are less acidic than N-phosphonomethylglycine.

Summary of the Invention

These and other advantages are achieved by a method of obtaining purified N-phosphonomethylglycine from aqueous solutions containing impurities which comprises passing the aqueous solution through an ion exchange column containing a weakly basic ion exchange resin to remove impurities in the aqueous solution that are more acidic than N-phosphonomethylglycine.

Detailed Description of the Invention

According to the present invention, an aqueous stream in a process to prepare N-phosphonomethylglycine, or an aqueous waste stream from the N-phosphonomethylglycine manufacturing process, will contain varying amounts of N-phosphonomethylglycine, depending upon the temperature of the aqueous stream and other factors. At 25°C, N-phosphonomethylglycine is soluble in water to the degree of about 1.3%. Such aqueous streams will contain other impurities from the manufacturing process, which may be unwanted by-products or unreacted starting materials. According to the method of the present invention, the aqueous stream containing such impurities are passed through ion exchange columns containing weakly basic ion exchange resins to remove the impurities that are more acidic and less acidic than N-phosphonomethylglycine. The N-phosphonomethylglycine in the aqueous stream from the effluent of the column can then be used directly as a herbicide, or processed further. The impurities retained on the weakly basic ion exchange resin can be removed by passing a dilute solution of a strong mineral acid, such as sulfuric acid or hydrochloric acid, through the column, as will occur to those skilled in the art.

The aqueous stream in a manufacturing process, or an aqueous stream as a waste stream, can contain any number of impurities, in addition to N-phosphonomethylglycine, depending upon the manufacturing process used. Examples of such impurities include compounds that are more acidic than N-phosphonomethylglycine such as, N-phosphonomethyliminodiacetic acid, N-formyl-N-phosphonomethylglycine, phosphoric acid, phosphorous acid, and the like. The aqueous stream can also contain impurities that are less acidic than N-phosphonomethylglycine such as, aminomethylphosphonic acid, iminodiacetic acid, formaldehyde, glycine, glyoxylic acid, and formic acid.

According to a preferred embodiment of this invention, there is provided a method of concentrating and purifying N-phosphonomethylglycine in an aqueous stream containing impurities selected from the group consisting of N-phosphonomethyliminodiacetic acid, N-formyl-N-phosphonomethylglycine, phosphoric acid, phosphorous acid, aminomethylphosphonic acid, iminodiacetic acid, formaldehyde, glycine, gloxylic acid and formic acid, which comprises: a) passing the process stream through a first ion exchange column containing the weakly basic ion exchange resin which retains impurities more acidic than N-phosphonomethylglycine, the impurities retained being selected from the group consisting of N-phosphonomethyliminodiacetic acid, N-formyl-N-phosphonomethylglycine, phosphoric acid, phosphorous acid and; b) passing the effluent from the first column through a second ion exchange column containing a weakly basic ion exchange resin until breakthrough of N-phosphonomethylglycine occurs; and thereafter, c) recovering the N-phosphonomethylglycine by passing through the second ion exchange column a base selected from the group consisting of alkali metal hydroxides, alkali metal carbonates, ammonium hydroxide, ammonium carbonate and primary or secondary organic amines having a molecular weight below about 300. The N-phosphonomethylglycine can also be recovered by passing through the second ion exchange column a strong mineral acid, such as sulfuric acid or hydrochloric acid. Hydrochloric acid is preferred.

Ion exchange columns are known to those skilled in the art. Typically, such ion exchange columns are closed cylindrical vessels having an inlet port at the top, an exit port at the bottom, and another port located near the middle of the column which is typically used to pass chemicals through the column to regenerate the resin. Such ion exchange columns are normally loaded to between half and two thirds of their volume with the ion exchange resin to permit expansion and contraction of the resin as it is being used or regenerated. The size of such ion exchange columns and the amount of resin to be used depends upon the volume of material that is to be processed. In the process of the present invention, no special configuration of ion exchange column is required, and as will occur to those skilled in the art in view of the present disclosure, the size of the ion exchange column or any particular configuration can be determined by those skilled in the art, depending on the volume of material to be processed.

The ion exchange resins for use in the process of the present invention are known to those skilled in the art. Broadly described, ion exchange is the reversible interchange of ions between a solid and liquid in which there is no permanent change in the structure of the ion exchange material. In 1935, the introduction of synthetic organic ion exchange resins resulted from the synthesis of phenolic condensation products containing either sulfonic or amine groups which could be used for the reversible exchange of cations or anions. Weakly basic ion exchange resins are obtained today in a variety of base strengths depending upon the nature of the amine functionality. Primary, secondary and tertiary amine functionality, or mixtures of them, can be put into various structures ranging from epichlorohydrin-amine condensates and acrylic polymers, to styrene-divinylbenzene copolymers. The ability of such weak base resins to absorb acids depends upon their basicity and the pKa of the acid involved. Since N-phosphonomethylglycine has a pKa value of about 2.2, any weakly basic ion exchange resin that has sufficient basicity to absorb N-phosphonomethylglycine and acids that have a pKa value of less than about 2.2 can be used in the process of the present invention.

Commercially available ion exchange resins that can be used in the process of the present invention include the weakly basic ion exchange resins sold by: Rohm & Haas Co. (Philadelphia, PA) under their Amberlite trademark such as Amberlite IRA-93, Amberlite IRA-94, Amberlite IRA-68 and Amberlite IRA-35; Diamond Shamrock Corp. (Dallas, TX) under their trademark Duolite A-392; and Sybron Chemicals, Inc. (Birmingham, NJ) under their Ionac trademark such as Ionac 305, Ionac 365 and Ionac 380. Other commercially available ion exchange resins can be used as known to those skilled in the art.

In the process of the present invention, as the aqueous stream is passed through the weakly basic ion exchange resin, impurities that are more acidic than N-phosphonomethylglycine, such as N-phosphonomethyliminodiacetic acid, N-formyl-N-phosphonomethylglycine, phosphoric acid, phosphorous acid, and the like, are absorbed on the weakly basic ion exchange resin. As additional quantities of the aqueous stream are passed through the resin, the N-phosphonomethylglycine is displaced by the more acidic impurities, resulting in an effluent from the ion exchange resin of N-phosphonomethylglycine and impurities that are less acidic, such as aminomethylphosphonic acid, iminodiacetic acid, formaldehyde, formic acid, glycine, and the like. The method is continued until break-through of impurities that are more acidic than N-phosphonomethylglycine occurs, as determined by conductivity measurements, pH change, and the like. On the other hand, the method can be practiced by volumetric control of the amount of aqueous stream entering the ion exchange column.

When breakthrough occurs, the column can be regenerated by washing with water, and then with a dilute aqueous solution of a strong mineral acid, such as sulfuric acid or hydrochloric acid. As is known to those skilled in the art, strong oxidizing acids, such as hot nitric acid or chromic acid/nitric acid mixtures, should be avoided for regeneration, and certain metal ions, such as iron, manganese and copper, should be minimized in any oxidizing solution. Thereafter, a dilute base, such as a dilute sodium hydroxide solution, is passed through the column to complete the regeneration.

In one embodiment of this invention, an aqueous solution containing N-phosphonomethylglycine and various impurities are passed through an ion exchange column containing a weakly basic ion exchange resin until there is a breakthrough of impurities that are more acidic than N-phosphonomethylglycine. The effluent from the column can be collected and passed through an ion exchange column containing a weakly basic ion exchange resin, which can be either a separate column, or the same column that has been regenerated as described above. The effluent is passed through until there is a breakthrough of N-phosphonomethylglycine in the effluent. Then, the N-phosphonomethylglycine is recovered from the ion exchange resin by passing through the ion exchange column a strong mineral acid or a base to form a water soluble salt of N-phosphonomethylglycine.

Suitable bases that can be used include aqueous solutions of the alkali metal hydroxides, such as lithium hydroxide, sodium hydroxide, potassium hydroxide, and the like; alkali metal carbonates, such as sodium carbonate, potassium carbonate and the like; or ammonium hydroxide or ammonium carbonate. Organic amines that have a molecular weight below about 300 can also be used. Such organic amines include the alkyl amines, alkylene amines and alkanol amines containing not more than 2 amine groups, such as methylamine, ethylamine, n-propylamine, isopropylamine, n-butylamine, isobutylamine, sec-butylamine, n-amylamine, iso-amylamine, hexylamine, heptylamine, octylamine, nonylamine, decylamine, undecylamine, dodecylamine, tridecylamine, tetradecylamine, pentadecylamine, hexadecylamine, heptadecylamine, octadecylamine, methylethylamine, methylisopropylamine, methylhexylamine, methylnonylamine, methylpentadecylamine, methyloctadecylamine, ethylbutylamine, ethylheptylamine, ethyloctylamine, hexylheptylamine, hexyloctylamine, dimethylamine, dimethylamine, diethylamine, di-n-propylamine, diisopropylamine, di-n-amylamine, diisoamylamine, dihexylamine, diheptylamine, dioctylamine, trimethylamine, triethylamine, tri-n-propylamine, triisopropylamine, tri-n-butylamine, triisobutylamine, tri-sec-butylamine, tri-n-amylamine, ethanolamine, n-propanolamine, isopropanolamine, diethanolamine, N,N-diethylethanolamine, N-ethylpropanolamine, N-butylethanolamine, allylamine, n-butenyl-2-amine, n-pentenyl-2-amine, 2,3 - dimethylbutenyl - 2 - amine, di-butenyl-2-amine, n-hexenyl-2-amine and propylenediamine, primary aryl amines such as aniline, methoxyaniline, ethoxyaniline, o,m,p-toluidine, phenylenediamine, 2,4, 6-tribromoaniline, benzidine, naphthylamine, o,m,p-chloroaniline, and the like; hetrocyclic amines such as pyridine, morpholine; piperidine, pyrrolidine, indoline, azepine and the like. Isopropylamine is preferred.

In the preferred embodiment of this invention, there is provided a method of concentrating and purifying N-phosphonomethylglycine in an aqueous solution containing impurities selected from the group consisting of N-phosphonomethyliminodiacetic acid, N-formyl-N-phosphonomethylglycine, phosphoric acid, phosphorous acid, hexamethylenetetramine, aminomethylphosphonic acid, iminodiacetic acid, formaldehyde, glycine, formic acid, and the like which comprises: a) passing the aqueous stream through a first ion exchange column containing a weakly basic ion exchange resin which retains impurities more acidic than N-phosphonomethylglycine, the impurities retained being selected from the group consisting of N-phosphonomethyliminodiacetic acid, N-formyl-N-phosphonomethylglycine, phosphoric acid, phosphorous acid, and the like; b) passing the effluent from the first column through a second ion exchange column containing a weakly basic ion exchange resin until breakthrough of N-phosphonomethylglycine occurs; and thereafter, c) recovering the N-phosphonomethylglycine from the weakly basic ion exchange resin by passing an aqueous solution of a alkali metal hydroxide, or an amine having a molecular weight of less than about 300, through the second column.

As will occur to those skilled in the art in view of the disclosure, the weakly basic ion exchange resins can be regenerated by techniques known to those skilled in the art, such as by passing dilute hydrochloric acid through the resins to remove the impurities contained on the resin, and thereafter treating the resin with dilute sodium hydroxide. The impurities can then be recycled, if desired, to the process for manufacturing N-phosphonomethylglycine, or can be discarded.

The invention is further illustrated by, the following examples. All percentages are by weight unless otherwise indicated.

Examples

Three aqueous solutions (1098.7 g., 1078.8 and 592.2 g) containing 1.89%, 1.41% and 1.49% N-phosphonomethylglycine (glyphosate), respectively, were passed through an ion exchange system consisting of one 80 ml. column of Amberlite® IRA-93 ion exchange resin, and three 80 ml. columns of Amberlite IRA-68. The flow was stopped when the conductivity of the effluent from the second Amberlite IRA-68 column reached 4840 micromhos. Deionized water (600 ml.) was passed through the three Amberlite IRA-68 columns, and a solution (258.5 g.) of isopropylamine (3.3%) in water was passed through the first Amberlite IRA-68 column. When the solution was used up, additional water was added to the first Amberlite IRA-68 column. A product fraction (300 ml.) was collected, controlled by conductivity of the effluent, which contained 3.66% glyphosate. Additional water was added to the first Amberlite IRA-68 column and an afterrun (250 g.) was collected.

Valving was changed so that the first Amberlite IRA-68 column became the third in line, the second became first and the third became second. Process filtrates (542.2 g. and 266.0 g) containing 1.49 and 1.35% glyphosate, respectively, were passed through the four columns until the conductivity of the second column reached the specified valve. Water, isopropylamine solution and additional water were added to the Amberlite IRA-68 column first in line as described above. This produced a product fraction (300 ml.) containing 4.34% glyphosate.

During the above experiment the conductivity of the Amberlite IRA-93 columns effluent indicated that it was saturated with strong acids. Water, dilute hydrochloric acid, 3% sodium hydroxide solution and additional water was passed through the Amberlite IRA-93 column and it was returned to use.

Analytical data are showin in Table I.

### TABLE I

#### COMPOSITIONS, %

| Solu-tions(g) | Glypho-sate | N-Phosphono-methylimino-diacetic Acid | Form-aldehyde | Formic Acid | N-Methyl Glyphosate | N-formyl Glyphosate | Amino-methyl-Phosphonic Acid | Phos-phate | Phos-phite |
|---|---|---|---|---|---|---|---|---|---|
| 1098.7 | 1.89 | 0.020 | 1.99 | 0.85 | 0.156 | 0.11 | 0.33 | 0.016 | 0.003 |
| 1078.8 | 1.41 | 0.005 | 2.00 | 0.87 | 0.074 | 0.076 | 0.36 | 0.069 | 0.007 |
| 592.2 | 1.49 | 0.005 | 2.12 | 0.94 | 0.081 | 0.076 | 0.37 | 0.021 | 0.003 |
| 542.2 | 1.49 | 0.005 | 2.12 | 0.94 | 0.081 | 0.076 | 0.37 | 0.021 | 0.003 |
| 266.0 | 1.35 | 0.003 | 2.01 | 0.92 | 0.069 | 0.076 | 0.35 | 0.022 | 0.004 |
| Products(g) | | | | | | | | | |
| 300 | 3.66 | | | 0.074 | 0.18 | 0.01 | 0.03 | 0.002 | |
| 300 | 4.34 | | | 0.101 | 0.31 | 0.025 | 0.06 | 0.005 | |

6

**Claims**

1. A method of obtaining purified N-phosphonomethylglycine from an aqueous solution containing N-phosphonomethylglycine and various impurities which comprises passing the aqueous solution through an ion exchange column containing a weakly basic ion exchange resin to remove impurities from the aqueous solution that are more acidic than N-phosphonomethylglycine.

2. A method of Claim 1 wherein the weakly basic ion exchange resin can sorb acids having a pKa value less than about 2.2.

3. A method of Claim 1 wherein the impurities that are more acidic that N-phosphonomethylglycine are selected from the group consisting of N-phosphonomethyliminodiacetic acid, N-formyl-N-phosphonomethylglycine, phosphoric acid, and phosphorous acid,

4. A method of Claim 3 wherein the impurities are removed from the weakly basic ion exchange resin by passing a dilute solution of a strong mineral acid through the column.

5. A method of Claim 4 wherein the dilute solution of the strong mineral acid is dilute hydrochloric acid.

6. A method of Claim 1 which comprises:
   A. passing the aqueous solution through a first ion exchange column containing a weakly basic ion exchange resin;
   B. passing the aqueous solution as an effluent from the first ion exchange column through a second ion exchange column containing a weakly basic ion exchange resin until breakthrough of N-phosphonomethylglycine occurs in the aqueous solution as an effluent from the second column; and thereafter,
   C. recovering the N-phosphonomethylglycine from the weakly basic ion exchange resin in the second ion exchange column by passing a base or a strong mineral acid through the column.

7. A method of Claim 6 wherein the ion exchange resin in the first and second ion exchange columns can sorb acids having a pKa value greater than about 2.2.

8. A method of Claim 7 wherein the weakly basic ion exchange resin in the first column sorbs impurities from the aqueous solution, the impurities being selected from the group consisting of N-phosphonomethyliminodiacetic acid, N-formyl-N-phosphonomethylglycine, phosphoric acid and phosphorous acid.

9. A method of Claim 6 wherein N-phosphonomethylglycine is sorbed by the weakly basic ion exchange resin in the second ion exchange columns, permitting impurities that are more basic than N-phosphonomethylglycine to remain in the aqueous solution as the effluent from the second column.

10. A method of Claim 6 wherein the strong mineral acid is hydrochloric acid.

11. A method of Claim 6 wherein the base to recover the N-phosphonomethylglycine is selected from the group consisting of an aqueous solution of alkali metal hydroxides, alkali metal carbonates, ammonium hydroxides and ammonium carbonate.

12. A method of Claim 11 wherein the alkali metal hydroxide is sodium hydroxide.

13. A method of Claim 11 wherein the base is an aqueous solution of ammonium hydroxide.

14. A method of Claim 6 wherein the base to recover the N-phosphonomethylglycine is an organic amine having a molecular weight below about 300.

15. A method of Claim 14 wherein the organic amine is isopropylamine.

**Patentansprüche**

1. Verfahren zum Erhalten von gereinigtem N-Phosphonomethylglycin aus einer wässerigen Lösung, die N-Phosphonomethylglycin und verschiedene Verunreinigungen enthält, welches das Führen der wässerigen Lösung durch eine Ionenaustauschersäule enthaltend ein schwach basisches Ionenaustauscherharz zur Entfernung von Verunreinigungen, die saurer sind als N-Phosphonomethylglycin, aus der wässerigen Lösung umfaßt.

2. Verfahren nach Anspruch 1, bei welchem das schwach basische Ionenaustauscherharz Säuren mit einem pKa-Wert von weniger als etwa 2,2 sorbieren kann.

3. Verfahren nach Anspruch 1, bei welchem die Verunreinigungen, die saurer sind als N-Phosphonomethylglycin, aus der Gruppe bestehend aus N-Phosphonomethyliminodiessigsäure, N-Formyl-N-phosphonomethylglycin, Phosphorsäure und phosphoriger Säure, ausgewählt werden.

4. Verfahren nach Anspruch 3, bei welchem die Verunreinigungen vom schwach basischen Ionenaustauscherharz durch das Führen einer verdünnten Lösung einer starken Mineralsäure durch die Säule entfernt werden.

5. Verfahren nach Anspruch 4, bei welchem die verdünnte Lösung der starken Mineralsäure verdünnte Salzsäure ist.

6. Verfahren nach Anspruch 1, welches umfaßt:
   A. Führen der wässerigen Lösung durch eine erste Ionenaustauschersäule, die ein schwach basisches Ionenaustauscherharz enthält;
   B. Führen der wässerigen Lösung als Abfluß von der ersten Ionenaustauschersäule durch eine zweite Ionenaustauschersäule, die ein schwach basisches Ionenaustauscherharz enthält, bis der Durchbruch von N-Phosphonomethylglycin in der wässerigen Lösung als Abfluß von der zweiten Säule auftritt; und danach
   C. Entfernen des N-Phosphonomethylglycins vom schwach basischen Ionenaustauscherharz in der zweiten Ionenaustauschersäule durch das Führen einer Base oder starken Mineralsäure durch die Säule.

7. Verfahren nach Anspruch 6, bei welchem das Ionenaustauscherharz in der ersten und zweiten Ionenaustauschersäule Säuren mit einem pKa-Wert von mehr als etwa 2,2 sorbieren kann.

8. Verfahren nach Anspruch 7, bei welchem das schwach basische Ionenaustauscherharz in der ersten Säule die Verunreinigungen aus der wässerigen Lösung sorbiert, wobei die Verunreinigungen aus der Gruppe bestehend aus N-Phosphonomethyliminodiessigsäure, N-Formyl-N-phosphonomethylglycin, Phosphorsäure und phosphoriger Säure ausgewählt werden.

9. Verfahren nach Anspruch 6, bei welchem N-Phosphonomethylglycin durch das schwach basische Ionenaustauscherharz in der zweiten Ionenaustauschersäule sorbiert wird, wobei ermöglicht wird, daß Verunreinigungen, die basischer sind als N-Phosphonomethylglyin, in der wässerigen Lösung als Abfluß von der zweiten Säule zurückbleiben.

10. Verfahren nach Anspruch 6, bei welchem die starke Mineralsäure Salzsäure ist.

11. Verfahren nach Anspruch 6, bei welchem die Base zur Gewinnung von N-Phosphonomethylglyin aus der Gruppe bestehend aus einer wässerigen Lösung von Alkalimetallhydroxiden, Alkalimetallcarbonaten, Ammoniumhydroxiden und Ammoniumcarbonat ausgewählt wird.

12. Verfahren nach Anspruch 11, bei welchem das Alkalimetallhydroxid Natriumhydroxid ist.

13. Verfahren nach Anspruch 11, bei welchem die Base eine wässerige Lösung von Ammoniumhydroxid ist.

**14.** Verfahren nach Anspruch 6, bei welchem die Base zur Gewinnung von N-Phosphonomethylglycin ein organisches Amin mit einer Molmasse von weniger als etwa 300 ist.

**15.** Verfahren nach Anspruch 14, bei welchem das organische Amin Isopropylamin ist.

**Revendications**

**1.** Procédé d'obtention de la N-phosphonométhylglycine purifiée à partir d'une solution aqueuse contenant de la N-phosphonométhylglycine et diverses impuretés qui comprend le passage de la solution aqueuse à travers une colonne échangeuse d'ions contenant une résine échangeuse d'ions faiblement basique pour enlever les impuretés de la solution aqueuse qui sont plus acides que la N-phosphonométhylglycine.

**2.** Procédé selon la revendication 1, dans lequel la résine échangeuse d'ions faiblement basique peut sorber les acides ayant une valeur de pKa inférieure à environ 2,2.

**3.** Procédé selon la revendication 1, dans lequel les impuretés qui sont plus acides que la N-phosphonométhylglycine sont choisies à partir du groupe constitué de l'acide N-phosphonométhyliminodiacétique, la N-formyl-N-phosphonométhylglycine, l'acide phosphorique et l'acide phosphoreux.

**4.** Procédé selon la revendication 3, dans lequel les impuretés sont éliminées de la résine échangeuse d'ions faiblement basique en passant une solution diluée d'un acide minéral fort à travers la colonne.

**5.** Procédé selon la revendication 4, dans lequel la solution diluée de l'acide minéral fort est de l'acide chlorhydrique dilué.

**6.** Procédé selon la revendication 1 qui comprend les étapes consistant à :
A. passer la solution aqueuse à travers une première colonne échangeuse d'ions contenant une résine échangeuse d'ions faiblement basique
B. passer la solution aqueuse en tant qu'effluent provenant de la première colonne échangeuse d'ions à travers une seconde colonne échangeuse d'ions contenant une résine échangeuse d'ions faiblement basique jusqu'à ce que se produise l'apparition de la N-phosphonométhylglycine dans la solution aqueuse en tant qu'effluent provenant de la seconde colonne, et ensuite
C. récupérer la N-phosphonométhylglycine à partir de la résine échangeuse d'ions faiblement basique dans la seconde colonne échangeuse d'ions en passant une base ou un acide minéral fort à travers la colonne.

**7.** Procédé selon la revendication 6, dans lequel la résine échangeuse d'ions dans les première et seconde colonnes échangeuses d'ions peut sorber les acides ayant une valeur de pKa supérieure à environ 2,2.

**8.** Procédé selon la revendication 7, dans lequel la résine échangeuse d'ions faiblement basique dans la première colonne sorbe les impuretés à partir de la solution aqueuse, les impuretés étant choisies à partir du groupe constitué de l'acide N-phosphonométhyliminodiacétique, la N-formyl-N-phosphonométhylglycine, l'acide phosphorique et l'acide phosphoreux.

**9.** Procédé selon la revendication 6, dans lequel la N-phosphonométhylglycine est sorbée par la résine échangeuse d'ions faiblement basique dans la seconde colonne échangeuse d'ions permettant aux impuretés qui sont plus basiques que la N-phosphonométhylglycine de rester dans la solution aqueuse en tant qu'effluent provenant de la seconde colonne.

**10.** Procédé selon la revendication 6, dans lequel l'acide minéral fort est l'acide chlorhydrique.

**11.** Procédé selon la revendication 6, dans lequel la base pour récupérer la N-phosphonométhylglycine est choisie à partir du groupe constitué d'une solution aqueuse d'hydroxydes de métal alcalin , de carbonates de métal alcalin , d'hydroxyde d'ammonium et de carbonate d'ammonium.

**12.** Procédé selon la revendication 11, dans lequel l'hydroxyde de métal alcalin est l'hydroxyde de sodium.

**13.** Procédé selon la revendication 11, dans lequel la base est une solution aqueuse d'hydroxyde d'ammonium.

**14.** Procédé selon la revendication 6, dans lequel la base pour récupérer la N-phosphonométhylglycine est une amine organique ayant un poids moléculaire inférieur à environ 300.

**15.** Procédé selon la revendication 14, dans lequel l'amine organique est l'isopropylamine.